# FASCICULE DE BREVET EUROPEEN

(11) **EP 3 468 764 B1**
(45) Date de publication et mention de la délivrance du brevet: **02.12.2020**
(21) Numéro de dépôt: 17732989.3
(22) Date de dépôt: 09.06.2017
(51) Int. Cl.: B29C 43/28, B29C 43/40

(54) **DISPOSITIF DE PROTECTION D'UN INSERT DE FIXATION LORS DE SON SURMOULAGE**
VORRICHTUNG ZUM SCHUTZ EINES BEFESTIGUNGSEINSATZES BEIM UMSPRITZEN DAVON
DEVICE FOR PROTECTING AN ATTACHMENT INSERT DURING THE OVERMOULDING OF SAME

(30) Priorité: 09.06.2016 FR 1655292
(43) Date de publication de la demande: 17.04.2019
(73) Titulaire: Compagnie Plastic Omnium, 69007 Lyon (FR); Bollhoff Otalu S.A., 73490 La Ravoire (FR)
(72) Inventeur: TRESSE, David, 01390 Saint-Andre de Corcy (FR); BERLIRE, Emmanuelle, 73190 Challes les Eaux (FR); FAGUER, Sylvain, 73800 Arbin (FR); BASSET, Raphael, 73000 Sonnaz (FR); LEJARS, Patrick, 38530 Barraux (FR)
(74) Mandataire: LLR
(86) Numéro de dépôt international: PCT/FR2017/051461
(87) Numéro de publication internationale: WO 2017/212185

(56) Documents cités:
- EP-A1- 0 932 288
- WO-A1-2014/102509
- WO-A1-2016/016550

## Description

La présente invention concerne le domaine technique de la fabrication de pièces en matière plastique pour véhicule automobile, et notamment le domaine du surmoulage d'insert de fixation pour pièces automobiles.

Dans l'industrie automobile, il est connu de fabriquer et d'utiliser des pièces comportant un insert métallique et une partie en matière plastique surmoulée sur l'insert métallique. Il est également connu d'utiliser lors du surmoulage des inserts en matière plastique.

L'utilisation de fixations structurelles est notamment nécessaire pour les pièces de structure : les fixations de siège sur un plancher ou le renvoi de ceinture sur un pied milieu par exemple. La réalisation de telles pièces s'est imposée comme une solution permettant de satisfaire des exigences généralement contraires quant aux propriétés de l'élément de structure, par exemple des exigences de légèreté et de résistance mécanique, en particulier aux chocs.

La réalisation de telles pièces structurelles en matériau plastique nécessite donc d'apporter des solutions de fonctionnalisation notamment pour les assembler solidement soit entre elles, soit au véhicule. A cette fin, il est connu d'utiliser des inserts, par exemple métalliques, comportant un moyen de fixation tel qu'un filetage (vis et/ou trou taraudé).

Pour réaliser une pièce en matière plastique, il est connu d'utiliser un procédé de moulage, tel que le moulage par compression et/ou par injection.

Dans le cas d'un moulage par compression à chaud sous pression d'une matière plastique thermodurcissable, le procédé est en général réalisé dans un moule par déplacement d'un élément mobile du moule (mis en mouvement par une presse) par rapport à un élément fixe du moule, ces éléments étant typiquement en acier.

Généralement, on pose dans un moule de compression un plan de chargement constitué de feuilles de matière plastique, typiquement un matériau composite dit «SMC» (de l'anglais «sheet moulding compound»). Puis on actionne la presse pour fermer le moule. Puis on continue d'actionner la presse pour transmettre une pression de moulage à la matière plastique. On dit que le moule est en phase de compactage. La matière plastique peut alors fluer et prendre la forme de l'empreinte du moule. Enfin, lors d'une phase dite « de cuisson », la matière plastique polymérise pour former une pièce finie.

Pour intégrer des inserts de fixation dans une pièce ainsi moulée, il est connu de les rapporter après moulage de la pièce par une ou plusieurs opérations en reprise, consistant d'abord à leur ménager un logement, le plus souvent un trou débouchant dans l'épaisseur pièce, et réalisé pat usinage, perçage, poinçonnage, avant de mettre en place l'insert dans ce logement et de l'y fixer par collage, rivetage, sertissage ou vissage.

Ce procédé de fixation est contraignant pour des raisons :
- de coût des opérations effectuées en reprise. En effet ce procédé nécessite différents outillages, des équipements supplémentaires, des durées supplémentaires pour chaque opération et donc un temps de cycle global par pièce plus important, et implique une perte de matière lors de la réalisation des logements.
- d'hygiène, santé et de maintenance des équipements en raison de la poussière produite.
- de tenue mécanique du fait des jeux résiduels d'assemblage entre l'insert et la pièce.

Par ailleurs, il est connu qu'un élément rapporté en reprise après moulage présente des défauts de positionnement par rapport aux formes de la pièce obtenue par moulage.

Il y a en effet une perte du « référentiel géométrique », du fait que l'on sorte la pièce du moule sans l'insert, puis que l'on dispose la pièce sur un posage pour successivement y réaliser les logements puis y ajouter les inserts. L'imprécision sur les positions relatives des inserts entre eux et par rapport à la pièce rendent l'assemblage de la pièce avec un autre composant ou sur le véhicule plus difficile : par exemple des défauts d'entraxe ou de perpendicularité peuvent empêcher cet assemblage sur véhicule.

En alternative, il est aussi connu d'intégrer des inserts de fixation dans une pièce lors de son surmoulage, et il est alors nécessaire de protéger l'organe de fixation de cet insert, pour éviter que la matière plastique ne viennent recouvrir, même partiellement, cet organe. En effet, cet organe de fixation, particulièrement dans le cas d'un filetage, ne peut plus permettre de fixer un élément à la pièce dans laquelle est surmoulé l'insert si ce filetage est partiellement recouvert de matière plastique chargée d'éléments de renfort.

On connaît également de la demande de brevet FR3024386, un système de moule permettant le positionnement et le maintien précis d'un insert dans la cavité de ce moule, au moyen d'une broche débrayable.

Cette solution nécessite de fabriquer des moules intégrant des mécanismes supplémentaires et complexes, donc plus difficiles à fabriquer et à entretenir. Le document WO 2014/102509 A1 divulgue une dispositif de protection d'un insert de fixation pour le surmoulage de l'insert de fixation par une matière plastique au moyen d'un moule l'insert de fixation comportant un organe de fixation.

L'invention a pour but de remédier à ces inconvénients en fournissant un dispositif de protection d'un insert de fixation, simple à fabriquer et simple d'utilisation, pour le surmoulage de l'insert de fixation par une matière plastique au moyen d'un moule, l'insert de fixation comportant un organe de fixation.

Ce dispositif comporte un moyen transperçant adapté à transpercer au moins une feuille de matière plastique (thermodurcissable ou thermoplastique), et un moyen d'étanchéification de l'organe de fixation, afin d'empêcher une infiltration de matière sur l'organe de fixation lors d'une opération de surmoulage.

Grâce à un tel dispositif de protection, il n'est plus nécessaire de fabriquer des moules spécifiques, difficiles à fabriquer et à entretenir, tels que les moules comportant des broches mobiles.

Un autre avantage, découlant du précédent, est qu'il est possible de réaliser des points de fixation très rapprochés, ce qui n'est pas le cas avec des mécanismes perfectionnés à base de broches, dont l'encombrement dans le moule ne permet pas de placer les fixations à faible distance les unes des autres.

Enfin, le fait de traverser la feuille de matière plastique grâce au moyen transperçant avant la mise en forme de la matière par moulage, permet de répartir uniformément la matière autour de l'organe de fixation, limitant ainsi les lignes de recollement, et donc, améliorant les performances mécaniques de la pièce comportant l'insert de fixation.

Le dispositif peut en outre comporter l'une ou plusieurs des caractéristiques suivantes, prises seules ou en combinaison :
- le dispositif forme un fût comportant une première et une deuxième extrémités opposées l'une de l'autre, la première extrémité étant munie du moyen transperçant, et la deuxième extrémité étant munie d'au moins une partie du moyen d'étanchéification ;
- le moyen transperçant constitue une forme effilée et/ou présente des arêtes ;
- le moyen d'étanchéification constitue un bouchon ;
- le moyen d'étanchéification est apte à être monté serré sur un insert selon l'une des revendications précédentes, dans lequel le moyen d'étanchéification comporte des formes créant un obstacle au passage de la matière plastique MP ;
- l'organe de fixation est un filetage ;
- le moyen d'étanchéification comporte un filet coopérant avec le filetage de l'insert.

L'invention concerne également un ensemble d'un insert et d'un dispositif selon l'invention, dans lequel l'insert comporte un trou taraudé comportant un filetage et constituant un élément femelle, et le moyen d'étanchéification comportant un élément mâle adapté à coopérer avec l'élément femelle, afin de boucher de façon étanche le trou taraudé.

L'invention concerne également un ensemble d'un insert et d'un dispositif selon l'invention, dans lequel l'insert comporte une vis portant un filetage et constituant un élément mâle, et le moyen d'étanchéification comportant un élément femelle adaptée à coopérer avec l'élément mâle, afin de recouvrir de façon étanche la vis.

Selon l'invention, le moyen d'étanchéification est de préférence monté serré sur l'insert.

L'invention concerne également un ensemble d'un moule et d'un dispositif selon l'invention, dans lequel le moule comporte un logement adapté à recevoir une partie du dispositif comprenant au moins le moyen transperçant.

Selon l'invention, les dimensions du logement sont avantageusement définies de façon à ce que lorsque le moule est fermé, une partie du moule appuie sur le dispositif de façon à induire un appui serré du dispositif sur l'insert, et de façon à induire un écrasement du dispositif permettant de combler le logement afin d'éviter une infiltration de matière plastique dans le logement.

Selon l'invention, le moule peut comporter un logement apte à recevoir l'insert afin de contrôler sa position et d'empêcher tout mouvement lors d'un fluage de matière plastique.

L'invention concerne également un procédé de moulage d'une pièce de véhicule automobile en matière plastique comprenant au moins un insert partiellement surmoulé, dans lequel on réalise les étapes suivantes au moyen d'un ensemble selon l'invention d'un moule et d'un dispositif :
- on engage le dispositif dans ou sur l'insert ;
- on introduit l'insert dans le moule ;
- on presse au moins une feuille de matière plastique sur le dispositif afin de transpercer la feuille de matières plastique au moyen du moyen transperçant ;
- on ferme le moule, et l'on applique une pression afin de faire fluer la matière plastique ;
- on ouvre le moule, et l'on éjecte la pièce portant l'insert surmoulé.

Selon, l'invention, on peut retirer le dispositif de la pièce.

Enfin, selon l'invention, on peut engager le dispositif dans ou sur l'insert par un montage serré, et l'on applique une pression lors de la fermeture du moule afin de maintenir une contrainte sur le dispositif afin d'assurer une étanchéité.

L'invention sera mieux comprise à la lecture des figures annexées, qui sont fournies à titre d'exemples et ne présentent aucun caractère limitatif, dans lesquelles :
- la figure 1 illustre schématiquement un exemple de réalisation d'un ensemble comportant un moule, un insert de fixation, et un dispositif de protection de l'insert pour son surmoulage ;
- les figures 2A et 2B illustrent de façon détaillée deux exemples de réalisation du dispositif pour le surmoulage d'un insert de fixation ;
- les figures 3A et 3B illustrent de façon détaillée deux exemples d'insert de fixation, l'un avec un trou taraudé (figure 3A), l'autre avec une vis (figure 3B) ;
- les figures 4A et 4B illustrent de façon détaillée deux exemples d'ensemble comportant un dispositif emboité dans, ou sur, un insert de fixation comportant un trou taraudé (figure 4A) ou une vis (figure 4B) ;
- les figures 5A à 5D illustrent un procédé de moulage d'une pièce de véhicule automobile en matière plastique comprenant un insert de fixation, au moyen d'un moule de compression et d'un dispositif pour le surmoulage de l'insert de fixation ;
- Les figures 6A et 6B illustrent des exemples de pièces obtenues selon le procédé illustré par les figures 5A à 5D.

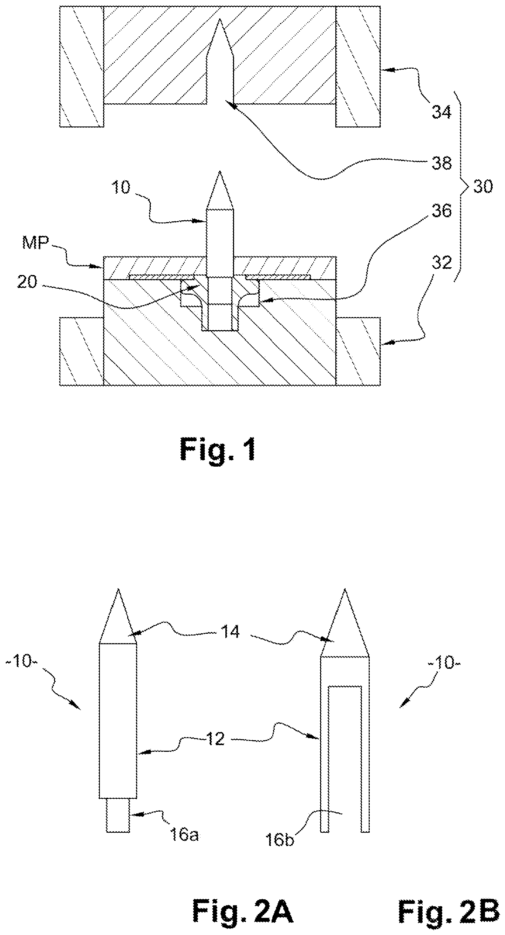

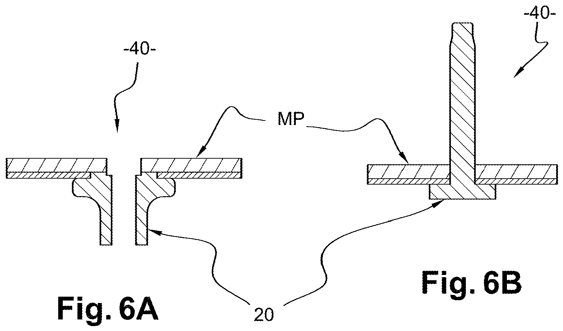

On se réfère maintenant à la figure 1 qui décrit un exemple de réalisation d'un dispositif 10 pour le surmoulage d'un insert de fixation 20, par une matière plastique thermodurcissable MP au moyen d'un moule de compression 30. Le moule 30 permet ainsi de former une pièce 40 (voir figures 6A et 6B) de véhicule automobile en matière plastique MP comprenant au moins un insert de fixation 20.

On appelle « insert de fixation », un premier élément rapporté dans l'empreinte du moule, à chaque cycle de moulage, et comportant au moins un organe de fixation. Un organe de fixation est une zone d'interface fonctionnelle permettant de fixer un deuxième élément à la pièce dans laquelle est surmoulé l'insert. Cet organe de fixation peut être un filetage mâle ou femelle, porté par une vis ou un trou taraudé, une surface de soudure ou de collage, une forme à riveter...

Le dispositif 10 permet notamment le surmoulage d'un insert de fixation 20 comportant un organe de fixation 22, car il permet de protéger cet organe de fixation 22 en évitant que, dans la cavité du moule, de la matière plastique MP ne vienne même partiellement le recouvrir, et ce afin de préserver la fonctionnalité de fixation de l'insert 20 optimale.

On se réfère maintenant aux figures 2A et 2B qui illustrent de façon détaillée deux exemples de réalisation de dispositif 10, dans lesquels l'organe de fixation 22 est un filetage.

Selon ces deux exemples, le dispositif 10 est de forme extérieure allongée, formant un fût 12 principal comportant deux extrémités de forme et de fonction différentes. Selon l'exemple illustré, le fût est cylindrique. Mais la section du fût peut avoir toute forme : carré, triangle,...

La première extrémité est munie d'un moyen transperçant 14, apte à traverser au moins une feuille de semi-produit en matière MP thermodurcissable ou thermoplastique. Ce moyen transperçant 14, de forme effilée et/ou présentant des arêtes peut être rapporté sur le fût 12 ou venu de matière avec le fût 12.

La seconde extrémité, opposée à la première extrémité, est munie d'un moyen d'étanchéification 16 de l'organe de fixation 22 afin d'empêcher une infiltration de la matière plastique MP lors de l'opération de surmoulage. Ce moyen d'étanchéification 16 peut être rapporté sur l'axe 12 ou venu de matière avec l'axe 12.

Le moyen d'étanchéification 16 a pour fonction d'empêcher une venue de la matière plastique MP lors de l'opération de surmoulage sur l'organe de fixation 22.

Pour réaliser cette fonction, différentes solutions sont envisageables. On peut par exemple concevoir le moyen d'étanchéification 16, en fonction de la géométrie de l'insert de fixation 20 et de l'organe de fixation 22, afin de réaliser un prémontage serré, assurant une étanchéification par serrage. Cette étanchéification peut être renforcée en utilisant alors avantageusement la compression exercée par la partie mobile du moule. En effet, lors de la fermeture du moule, le dispositif 10 peut être plaqué avec plus de force sur l'insert 20, permettant d'obtenir une surface de plaquage augmentée par une déformation supplémentaire contrôlée du moyen d'étanchéification 16. L'élément mobile du moule met alors sous contrainte le dispositif 10 sur l'insert 20, assurant ainsi une meilleure étanchéité lors de l'opération de moulage.

Cette solution peut être remplacée ou combinée avec d'autres solutions. Par exemple, le moyen d'étanchéification 16 peut comporter des formes telles que des godrons, des nervures, des bourrelets, des épaulements, en appui contre l'insert 20, lors du pré-montage et/ou soit par plaquage et déformation complémentaire obtenue lors de la fermeture du moule, qui créent alors un obstacle amélioré s'opposant au passage de la matière plastique MP.

Le dispositif 10 constitue ainsi un « bouchon perceur », apte à recouvrir au moins localement une zone de l'insert afin de protéger l'organe de fixation 22 d'un recouvrement par de la matière MP pendant le moulage, et apte à percer des feuilles de semi-produit d'une matière plastique thermodurcissable ou thermoplastique.

Le moyen transperçant 14, permettant de perforer et traverser une feuille de semi-produit en matière plastique, telle qu'une feuille de SMC, peut être de forme effilée et/ou présentant des arêtes. De façon générale, l'homme du métier saura trouver la forme adaptée au transpercement du chargement (ensemble de feuilles de matière plastique) introduit dans le moule 30, et nécessaire à la fabrication de la pièce 40 de véhicule automobile.

Ce moyen transperçant 14 est de préférence réalisé en un matériau à base de polyamide.

Le dispositif 10 constitue un bouchon perçant d'étanchéification, c'est-à-dire un organe apte à coopérer avec un organe de l'insert 20 portant l'organe de fixation 22, afin de s'interposer entre la matière plastique MP et l'organe de fixation 22

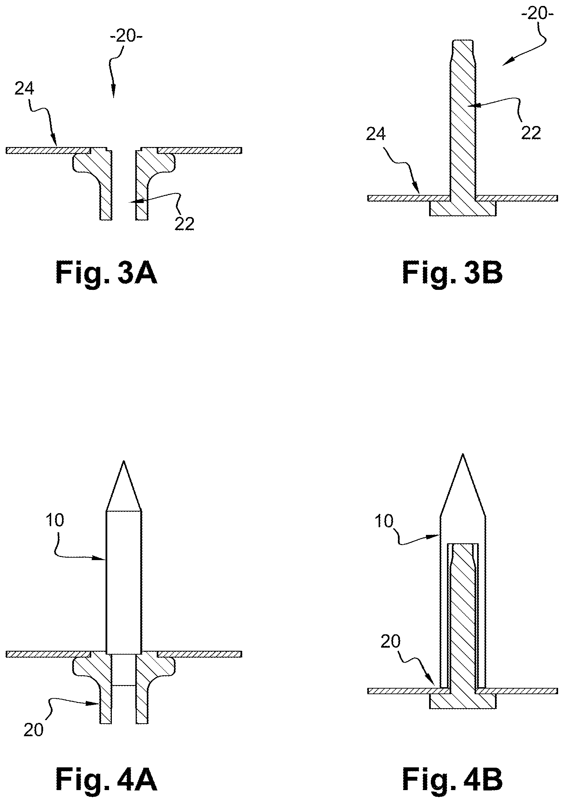

Ainsi lorsque l'insert 20 comporte un trou taraudé (figure 3A) portant le filetage 22a, et constituant un élément femelle, alors le moyen d'étanchéification 16a comporte un élément mâle (figure 2A) adapté à coopérer, par emboitement par exemple, avec cet élément femelle, afin de boucher de façon étanche le trou taraudé. De cette façon, après engagement du dispositif 10 dans l'insert 20, ou plus précisément du moyen 16a dans le trou taraudé, le dispositif 10 est en appui serré sur l'insert 20 faisant étanchéité. La figure 4A illustre un tel exemple de réalisation une fois le dispositif 10 et l'insert 20 assemblés.

Lorsque l'insert 20 comporte une vis (figure 3B) portant le filetage 22b, et constituant un élément mâle, alors le moyen d'étanchéification 16b comporte un élément femelle (figure 2B) adapté à coopérer, par emboitement par exemple, avec cet élément mâle, afin de recouvrir de façon étanche la vis. De cette façon, après engagement du dispositif 10 sur l'insert 20, ou plus précisément de la vis dans le moyen 16b, le dispositif 10 est en appui serré sur l'insert 20 faisant étanchéité. La figure 4B illustre un tel exemple de réalisation une fois le dispositif 10 et l'insert 20 assemblés.

Lorsque l'insert est un insert soudable, c'est-à-dire lorsque l'insert 20 est apte à être soudé sur un élément métallique du véhicule, par exemple la caisse, alors le moyen d'étanchéification 16 a une forme complémentaire de la zone à souder 22 de l'insert 20.

L'invention concerne également un ensemble d'un insert 20 et d'un dispositif 10 tel que décrits précédemment. Le dispositif 10 est adapté à l'insert 20, comme l'illustrent ensemble les figures 4A et 4B.

Selon un mode de réalisation, de manière à accentuer l'étanchéité, le dispositif 10 comporte un filet coopérant avec le filet 22 de l'insert. Les filets du dispositif 10 sont configurés de façon à ce qu'après engagement de l'insert 20 et du dispositif 10, le dispositif 10 est en appui serré sur l'insert 20 faisant étanchéité.

L'insert 20 peut être réalisé en tout matériau, notamment des matériaux métalliques ou en matière plastique.

L'invention concerne également un ensemble d'un moule 30 et d'un dispositif 10 tel que décrit précédemment.

Le moule 30 est un moule de compression pour former une pièce 40 de véhicule automobile en matière plastique MP comprenant au moins un insert 20 de fixation.

Le moule 30 permet notamment de surmouler partiellement l'insert 20. Le surmoulage est dit partiel lorsqu'au moins une surface de l'insert reste visible après surmoulage : la surface n'est pas recouverte de matière plastique lors du surmoulage.

Comme l'illustre la figure 1, le moule 30 comprend deux parties moulantes 32 et 34, délimitant la chambre de surmoulage de l'insert 20 et délimitant l'empreinte du moule.

De préférence, le moule 30 comporte un logement 36 apte à recevoir l'insert 20 afin de contrôler sa position et afin d'empêcher tout mouvement de l'insert 20 lors du fluage de la matière plastique.

Selon un mode de réalisation, l'une des parties 32 et 34 comporte un logement 38 adapté à recevoir une partie du dispositif 10 comprenant au moins le moyen transperçant 14. Le moyen transperçant 14 forme ainsi un élément mâle adapté à coopérer par emboitement avec le logement 38 formant un élément femelle, de sorte qu'une fois le moule 30 fermé, et pendant la compression de la matière plastique MP, le dispositif 10 est partiellement engagé dans le logement 38.

Les dimensions et formes du logement 38 sont définies de façon à ce que, lorsque le moule est fermé, la partie 32 ou 34 du moule 30 portant le logement 38, appuie sur le dispositif 10 permettant :
- de plaquer le dispositif 10 en appui serré sur l'insert 20, et donc une étanchéification optimale de l'organe de fixation 22 ;
- une compression axiale (c'est-à-dire dans la direction de fermeture du moule) du dispositif 10 permettant un écrasement axial de 16 ou une expansion radiale contre le logement 38, et donc, d'éviter une infiltration de matière plastique MP dans ce logement 38.

L'invention concerne également un procédé de moulage d'une pièce 40 de véhicule automobile en matière plastique comprenant au moins un insert 20 partiellement surmoulé. Les figures 4A et 4B illustrent la portion de telle pièce comportant l'insert 20.

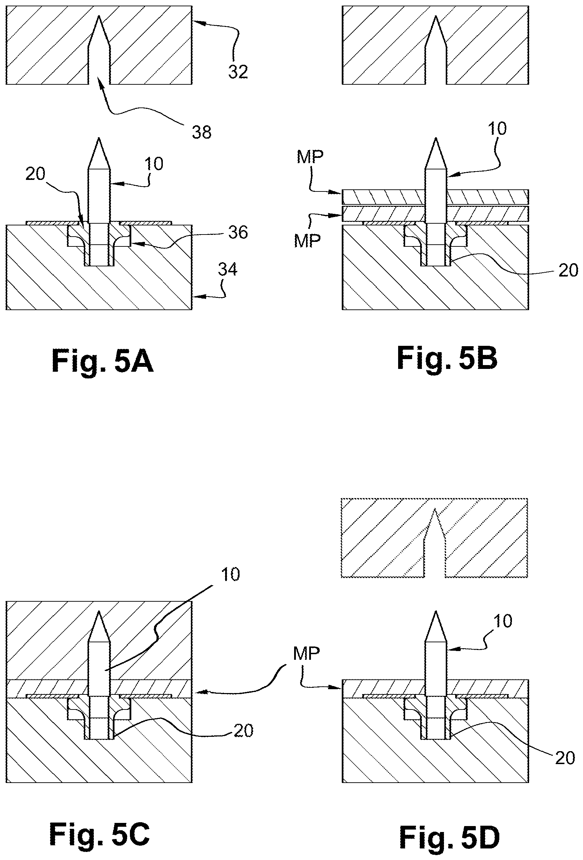

Les figures 5A à 5D illustrent le procédé. On note que ces figures ne représentent pas tout le moule 30, mais seulement la partie proche de l'insert 20. En particulier, on ne voit pas l'ensemble de la cavité de surmoulage, et les contacts entre les parties 32 et 34 du moule 30.

Selon ce procédé, on réalise au moins certaines des étapes suivantes au moyen d'un ensemble d'un moule 30 et d'un dispositif 10 selon l'invention, et au moyen d'un ensemble d'un insert 20 et du même dispositif 10 :
a) on engage le dispositif 10 dans ou sur l'insert 20, de façon à protéger l'organe de fixation 22 contre une infiltration de matière plastique MP (figure 5A) ;
b) on introduit l'insert 20 dans le moule 30, éventuellement on le positionne dans le logement 36 (figure 5A) ;
c) on dispose un plan de chargement, c'est-à-dire au moins une feuille d'un semi-produit de matière plastique, sur le dispositif 10 afin de transpercer la ou les feuilles de matières plastique, au moyen du moyen transperçant 14 (figure 5B) ;
d) on ferme le moule 30, le dispositif 10 s'engage partiellement dans le logement 38, et l'on applique une pression (lors de la compression ou de l'injection) afin de faire fluer la matière MP dans la cavité du moule (figure 5C) ;
e) on ouvre le moule 30 (figure 5D) et l'on éjecte la pièce 40 portant l'insert 20 surmoulé ;
f) éventuellement, on retire le dispositif 10 de la pièce 40 (figure 5D).

Les figures 6A et 6B illustrent des exemples de pièces 40 obtenues selon ce procédé.

Le dispositif 10 peut être réutilisé. Dans ce cas, on recommence le procédé à partir de l'étape b) avec le même dispositif 10, pour réaliser une autre pièce.

## Revendications

1. Dispositif (10) de protection d'un insert de fixation (20) pour le surmoulage de l'insert de fixation (20) par une matière plastique (MP) au moyen d'un moule (30), l'insert de fixation (20) comportant un organe de fixation (22), **caractérisé en ce que** le dispositif (10) comporte :
- un moyen transperçant (14) adapté à transpercer au moins une feuille de matière plastique ;
- un moyen d'étanchéification (16) de l'organe de fixation (22), afin d'empêcher une infiltration de matière plastique (MP) sur l'organe de fixation (22) lors d'une opération de surmoulage, le dispositif (10) formant un fût comportant une première et une deuxième extrémités opposées l'une de l'autre, la première extrémité étant munie dudit moyen transperçant (14), et la deuxième extrémité étant munie d'au moins une partie du moyen d'étanchéification (16).

2. Dispositif (10) selon la revendication 1, dans lequel le moyen transperçant (14) constitue une forme effilée et/ou présente des arêtes.

3. Dispositif (10) selon l'une des revendications précédentes, dans lequel le moyen d'étanchéification (16) constitue un bouchon.

4. Dispositif (10) selon l'une des revendications précédentes, dans lequel le moyen d'étanchéification (16) est apte à être monté serré sur un insert (20).

5. Dispositif (10) selon l'une des revendications précédentes, dans lequel le moyen d'étanchéification (16) comporte des formes créant un obstacle au passage de la matière plastique MP.

6. Dispositif (10) selon l'une des revendications précédentes, dans lequel l'organe de fixation (22) est un filetage.

7. Dispositif (10) selon la revendication 6, dans lequel le moyen d'étanchéification (16) comporte un filet coopérant avec le filetage (22) de l'insert (20).

8. Ensemble d'un insert (20) et d'un dispositif (10) selon l'une des revendications 1 à 7, dans lequel l'insert (20) comporte un trou taraudé comportant un filetage (22a) et constituant un élément femelle, et le moyen d'étanchéification (16a) comportant un élément mâle adapté à coopérer avec l'élément femelle, afin de boucher de façon étanche le trou taraudé.

9. Ensemble d'un insert (20) et d'un dispositif (10) selon l'une des revendications 1 à 7, dans lequel l'insert (20) comporte une vis portant un filetage (22b) et constituant un élément mâle, et le moyen d'étanchéification (16b) comportant un élément femelle adaptée à coopérer avec l'élément mâle, afin de recouvrir de façon étanche la vis.

10. Ensemble d'un insert (20) et d'un dispositif (10) selon l'une des revendications 8 et 9, dans lequel le moyen d'étanchéification (16) est monté serré sur l'insert (20).

11. Ensemble (40) d'un moule (30) et d'un dispositif (10) selon l'une des revendications 1 à 7, dans lequel le moule (30) comporte un logement (38) adapté à recevoir une partie du dispositif (10) comprenant au moins le moyen transperçant (14).

12. Ensemble (40) selon la revendication 11, dans lequel les dimensions du logement (38) sont définies de façon à ce que lorsque le moule (30) est fermé, une partie du moule (30) appuie sur le dispositif (10) de façon à induire un appui serré du dispositif (10) sur l'insert (20), et de façon à induire un écrasement du dispositif (10) permettant de combler le logement (38) afin d'éviter une infiltration de matière plastique (MP) dans le logement (38).

13. Ensemble (40) selon l'une des revendications 11 et 12, dans lequel le moule comporte un logement (36) apte à recevoir l'insert (20) afin de contrôler sa position et d'empêcher tout mouvement lors d'un fluage de matière plastique (MP).

14. Procédé de moulage d'une pièce (40) de véhicule automobile en matière plastique comprenant au moins un insert (20) partiellement surmoulé, dans lequel on réalise les étapes suivantes au moyen d'un ensemble selon l'une des revendications 11 à 13 :
- on engage le dispositif (10) selon l'une des revendications 1 à 7, dans ou sur l'insert (20) ;
- on introduit l'insert (20) dans le moule (30) ;
- on presse au moins une feuille de matière plastique (MP) sur le dispositif (10) afin de transpercer la feuille de matières plastique au moyen du moyen transperçant (14) ;
- on ferme le moule (30), et l'on applique une pression afin de faire fluer la matière plastique (MP) ;
- on ouvre le moule (30), et l'on éjecte la pièce (40) portant l'insert (20) surmoulé.

15. Procédé selon la revendication 14, dans lequel on retire le dispositif (10) de la pièce (40).

16. Procédé selon l'une des revendications 14 et 15, dans lequel on engage le dispositif (10) dans ou sur l'insert (20) par un montage serré, et l'on applique une pression lors de la fermeture du moule afin de maintenir une contrainte sur le dispositif (10) afin d'assurer une étanchéité.

## Patentansprüche

1. Vorrichtung (10) zum Schutz eines Befestigungseinsatzes (20) zum Umspritzen des Befestigungseinsatzes (20) durch ein Kunststoffmaterial (MP) mittels einer Form (30), wobei der Befestigungseinsatz (20) ein Befestigungselement (22) aufweist, **dadurch gekennzeichnet, dass** die Vorrichtung (10) aufweist:
ein Durchstechmittel (14), das zum Durchstechen mindestens einer Folie aus Kunststoffmaterial eingerichtet ist;
ein Dichtungsmittel (16) des Befestigungselements (22), um ein Eindringen von Kunststoffmaterial (MP) in das Befestigungselement (22) während eines Umspritzvorgangs zu verhindern, wobei die Vorrichtung (10) einen Fuß bildet, aufweisend ein erstes und ein zweites Ende, die sich gegenüberliegen, wobei das erste Ende mit dem Durchstechmittel (14) versehen ist und das zweite Ende mit mindestens einem Teil des Dichtungsmittels (16) versehen ist.

2. Vorrichtung (10) nach Anspruch 1, bei der das Durchstechmittel (14) eine sich verjüngende Form aufweist und / oder Rippen aufweist.

3. Vorrichtung (10) nach einem der vorhergehenden Ansprüche, bei der das Dichtungsmittel (16) einen Stopfen darstellt.

4. Vorrichtung (10) gemäß einem der vorhergehenden Ansprüche, wobei das Dichtungsmittel (16) so ausgelegt ist, dass es fest auf einem Einsatz (20) montiert ist.

5. Vorrichtung (10) nach einem der vorhergehenden Ansprüche, bei der das Dichtungsmittel (16) Formen aufweist, die ein Hindernis für den Durchgang des Kunststoffmaterials MP bilden.

6. Vorrichtung (10) gemäß einem der vorhergehenden Ansprüche, bei denen das Befestigungselement (22) ein Gewinde ist.

7. Vorrichtung (10) nach Anspruch 6, wobei das Dichtungsmittel (16) ein Gewinde aufweist, das mit dem Gewinde (22) des Einsatzes (20) zusammenwirkt.

8. Anordnung eines Einsatzes (20) und einer Vorrichtung (10) nach einem der Ansprüche 1 bis 7, wobei der Einsatz (20) ein Gewindeloch aufweist, das ein Gewinde (22a) aufweist und das ein weibliches Element bildet, und das Dichtungsmittel (16a) ein männliches Element aufweist, das zum Zusammenwirken mit dem weiblichen Element eingerichtet ist, um das Gewindeloch abzudichten.

9. Anordnung eines Einsatzes (20) und einer Vorrichtung (10) nach einem der Ansprüche 1 bis 7, wobei der Einsatz (20) eine Schraube aufweist, die ein Gewinde (22b) trägt und ein männliches Element bildet, und das Dichtungsmittel (16b) ein weibliches Element aufweist, das eingerichtet ist, mit dem männlichen Element zusammenzuwirken, um die Schraube wasserdicht abzudecken.

10. Anordnung eines Einsatzes (20) und einer Vorrichtung (10) nach einem der Ansprüche 8 und 9, bei der das Dichtungsmittel (16) fest an dem Einsatz (20) angebracht ist.

11. Anordnung einer Form (30) und einer Vorrichtung (10) nach einem der Ansprüche 1 bis 7, wobei die Form (30) ein Gehäuse (38) aufweist, das dazu ausgelegt ist, einen Teil der Vorrichtung (10) aufzunehmen, der mindestens das Durchstechmittel (14) aufweist.

12. Anordnung (40) nach Anspruch 11, wobei die Abmessungen des Gehäuses (38) so festgelegt sind, dass wenn die Form (30) geschlossen ist, ein Teil der Form (30) auf die Vorrichtung (10) drückt, um eine dichte Auflage der Vorrichtung (10) auf dem Einsatz (20) zu bewirken und um ein Quetschen der Vorrichtung (10) zu bewirken, wodurch es möglich wird, das Gehäuse (38) zu füllen, um ein Eindringen von Kunststoffmaterial (MP) in das Gehäuse (38) zu verhindern.

13. Anordnung (40) nach einem der Ansprüche 11 oder 12, wobei die Form ein Gehäuse (36) aufweist, das zur Aufnahme des Einsatzes (20) eingerichtet ist, um seine Position zu steuern und um jegliche Bewegung während des Fließens des Kunststoffmaterials (MP) zu verhindern.

14. Verfahren zum Formen eines Teils (40) eines Kraftfahrzeugs aus Kunststoffmaterial, aufweisend mindestens einen teilweise umspritzten Einsatz (20), wobei die folgenden Schritte mittels einer Anordnung gemäß einem der Ansprüche 11 bis 13 ausgeführt werden:
die Vorrichtung (10) gemäß einem der Ansprüche 1 bis 7 wird in oder auf den Einsatz (20) gesetzt;
- der Einsatz (20) wird in die Form (30) eingeführt;
- mindestens eine Folie aus Kunststoffmaterial (MP) wird auf die Vorrichtung (10) gepresst, um die Folie aus Kunststoffmaterial mit Hilfe des Durchstechmittels (14) zu durchstechen;
- die Form (30) wird geschlossen und Druck ausgeübt, um das Kunststoffmaterial zu schmelzen (MP) ;
- die Form (30) wird geöffnet und das Teil (40), das den umspritzten Einsatz (20) trägt, wird ausgeworfen.

15. Verfahren nach Anspruch 14, bei dem die Vorrichtung (10) von dem Teil (40) entfernt wird.

16. Verfahren nach einem der Ansprüche 14 und 15, wobei die Vorrichtung (10) durch einen Presspassung in oder auf dem Einsatz (20) in Eingriff gebracht wird ist und während des Schließens der Form ein Druck ausgeübt wird, um die Vorrichtung (10) zu belasten und eine Abdichtung zu gewährleisten.

## Claims

1. Device (10) for protecting a fastening insert (20) for overmoulding the fastening insert (20) with a plastic material (MP) using a mould (30), the fastening insert (20) comprising a fastening member (22), **characterised in that** the device (10) comprises:
- a piercing means (14) designed to pierce at least one sheet of plastic material;
- means (16) for sealing the fastening member (22) in order to prevent an infiltration of plastic material (MP) onto the fastening member (22) during an overmoulding operation, the device (10) forming a shaft comprising a first and a second end opposite one another, the first end being provided with said piercing means (14) and the second end being provided with at least a part of the sealing means (16).

2. Device (10) as claimed in claim 1, wherein the piercing means (14) has a tapered shape and/or has edges.

3. Device (10) as claimed in one of the preceding claims, wherein the sealing means (16) forms a plug.

4. Device (10) as claimed in one of the preceding claims, wherein the sealing means (16) is designed to be tightly mounted on an insert (20).

5. Device (10) as claimed in one of the preceding claims, wherein the sealing means (16) has shapes creating an obstacle to the passage of the plastic material MP.

6. Device (10) as claimed in one of the preceding claims, wherein the fastening member (22) is a thread.

7. Device (10) as claimed in claim 6, wherein the sealing means (16) has a thread cooperating with the thread (22) of the insert (20).

8. Assembly of an insert (20) and a device (10) as claimed in one of claims 1 to 7, wherein the insert (20) has a tapped hole having a thread (22a) and constituting a female element and the sealing means (16a) has a male element designed to cooperate with the female element in order to plug the tapped hole in a sealed arrangement.

9. Assembly of an insert (20) and a device (10) as claimed in one of claims 1 to 7, wherein the insert (20) comprises a screw having a thread (22b) and constituting a male element and the sealing means (16b) comprises a female element designed to cooperate with the male element in order to cover the screw in a sealed arrangement.

10. Assembly of an insert (20) and a device (10) as claimed in one of claims 8 and 9, wherein the sealing means (16) is tightly mounted on the insert (20).

11. Assembly (40) of a mould (30) and a device (10) as claimed in one of claims 1 to 7, wherein the mould (30) has a housing (38) designed to receive a part of the device (10) comprising at least the piercing means (14).

12. Assembly (40) as claimed in claim 11, wherein the dimensions of the housing (38) are defined so that when the mould (30) is closed, a part of the mould (30) presses on the device (10) in order to press the device (10) tightly on the insert (20) and in order to crush the device (10) enabling the housing (38) to be filled in order to prevent an infiltration of plastic (MP) into the housing (38).

13. Assembly (40) as claimed in one of claims 11 and 12, wherein the mould comprises a housing (36) designed to receive the insert (20) in order to control its position and prevent any movement during a flow of plastic material (MP).

14. Method for moulding a motor vehicle part (40) made from plastic material comprising at least one partially overmoulded insert (20), wherein the following steps are implemented using an assembly as claimed in one of claims 11 to 13:
- the device (10) as claimed in one of claims 1 to 7 is engaged on the insert (20);
- the insert (20) is introduced into the mould (30);
- at least one sheet of plastic material (MP) is pressed onto the device (10) in order to pierce the sheet of plastic material by means of the piercing means (14);
- the mould (30) is closed and a pressure applied in order to make the plastic material (MP) flow;
- the mould (30) is opened and the part (40) carrying the overmoulded insert (20) is ejected.

15. Method as claimed in claim 14, wherein the device (10) is removed from the part (40).

16. Method as claimed in one of claims 14 and 15, wherein the device (10) is engaged in or on the insert (20) by tight assembly and pressure is applied when the mould is closed in order to maintain a pressing force on the device (10) to provide a seal.
